# EUROPEAN PATENT APPLICATION

(11) **EP 4 755 807 A1**
(43) Date of publication of application: **10.06.2026**
(21) Application number: 25196049.8
(22) Date of filing: 14.08.2025
(51) Int. Cl.: B64G 1/64

(54) **MECHANISM FOR SEPARATING A SATELLITE FROM A LAUNCH VEHICLE**

(71) Applicant: Uarx Space, S.L., 36350 Nigrán Pontevedra (ES)
(72) Inventor: MARTÍN LARCO, Federico, 36350 Nigrán (ES); VILLA GRANATA, Andrés Eduardo, 36350 Nigrán (ES); HALLAK FIORENZA, Yanina Soledad, 36350 Nigrán (ES); NYGAARD, Cristian Federico, 36350 Nigrán (ES)
(74) Representative: Pons IP

(57) **Abstract**

Mechanism for separating a satellite (10) from a launch vehicle (9), comprising; an upper ring (8) on the satellite (10), a lower ring (7) on the launch vehicle (9), an expandable clamp (5) on the launch vehicle (9) and at least one elastic contact band (6) attached to the clamp (5) intended to embrace the rings (7,8) in the docking position. The mechanism also includes at least two pushers (11). Each pusher (11) comprises; a cylinder (2) fitted and fixed to the lower ring (7) and, in the docking position, fitted to the upper ring (8), a spring (4) fixed to the cylinder (2), and a pin (1). The pin has; an outer end (14) in contact with the band (6) and passing through the opening (12), and an inner end (15) arranged in the cylinder (2) and resting against the spring (4).

## Description

### OBJECT OF THE INVENTION

The present invention relates to a method of separating a satellite from a launch vehicle, comprising; an upper ring on the satellite and a lower ring on the launch vehicle intended to be in contact at the docking position of the satellite with the launch vehicle, and an expandable clamp which, with the intermediation of at least one elastic band, embraces the rings while keeping the satellite attached to the launch vehicle.

The object of the invention refers to the incorporation of pushers that collaborate in the separation of the band, and therefore of the clamp, from the rings when the clamp is expanded or released, thus facilitating the total detachment of the clamp, so that the satellite can detach freely from the shuttle vehicle.

### BACKGROUND OF THE INVENTION

The use of a mechanism for separating a satellite from a launch vehicle that includes a reusable connection is known. The satellite comprises an upper ring and the launch vehicle comprises a lower ring, and these rings are designed for contact. In the docking position of the satellite with the launch vehicle, an expandable clamp on the launch vehicle is compressed, and a band attached to the clamp hugs the rings. When the clamp expands, the band separates from the rings, and the satellite separates from the launch vehicle.

For the separation of the satellite and the launch vehicle from each other, the clamp can comprise an opening mechanism, which opens the clamp almost instantaneously.

Historically, the main concern of separation mechanisms was to achieve secure attachment during launch and the rapid separation of the satellite and launch vehicle. However, the evolution of space technology, particularly with the advent of more sensitive and miniaturized satellites, has broadened the focus beyond mere rapid release. The shift in design priorities now emphasizes control, low impact, and often reusable separation.

The separation mechanism thus securely attaches the satellite to its launch vehicle during the demanding ascent phase and then releases them precisely into their intended orbits.

As illustrated in the patents US6454214B1 the clamp generates the necessary radial compression force, which results in a robust axial clamping force. This ensures that the satellite and launch vehicle remain securely attached despite the significant dynamic loads encountered during launch, including vibration, acceleration and shock. However, the clamp must expand on its own. If the clamp is not opened cleanly, separation of the satellite and launch vehicle does not occur, and the rotational stability of the launch vehicle rings could be compromised.

Thus, the expansion of the band can have problems. In a potential scenario in existing mechanisms, the stress released for the clamp to expand may not be enough. For example, the band may "stick" or may not completely release from the rings, due to factors such as residual friction, minor deformities, or the bond between the bands and clamps. In that scenario, the separation force does not overcome these problems, so the separation is incomplete, and the satellite could be dragged or deflected by the launch vehicle.

In addition, the satellite's upper ring and the launch vehicle's lower ring can rotate due to dynamic forces. During dynamic separation, the rings may induce an undesirable rotational motion or experience instability that could negatively affect the cleanliness of the separation. Therefore, the stability of the interface hardware during dynamic separation is very important.

### DESCRIPTION OF THE INVENTION

The present invention is a mechanism for separating a satellite from a launch vehicle that additionally comprises pushers. The pushers are attached to the lower seats of a lower ring of the launch vehicle and, in the docking position of the satellite with the launch vehicle, the pushers are also fitted into upper seats of an upper ring of the satellite. The lower seats are arranged on a lower surface of the lower ring, and the upper seats are arranged on a lower surface of the upper ring. The upper surface and the lower surface are in contact in the docking position. The upper ring has an upper side edge, and the lower ring has a lower side edge.

In addition, the mechanism comprises an expandable clamp on the launch vehicle and at least one elastic contact band attached to the clamp. This band is intended to hug the side edges in the docking position to hold the rings together.

In the docking position of the satellite with the launch vehicle, the lower surface of the upper ring and the lower surface of the lower ring are intended to be in contact. In this docking position, the clamp is compressed, and the band embraces the lateral edges, establishing a fixation between the rings, and therefore between the satellite and the launch vehicle.

When the satellite is close to orbit, the clamp expands, the band is released, and the rings separate. In addition, the pushers push the band outwards, ensuring that the clamp expands completely. When the clamp is expanded, the rings separate from each other, leaving the satellite in orbit and the launch vehicle falling back to earth.

Each pusher comprises of a cylinder, a spring, and a pin.

The cylinder comprises of a base, a lid facing the band, and a wall. The cylinder has a cavity delimited by the base, the lid and the wall, thus protecting its interior. The wall is fitted and fixed to the lower seat of the lower ring, thus preventing the pusher from detaching from the lower ring. In addition, the lid has an opening oriented towards the band, which communicates with the cavity.

The spring is fixed to the base inside the cavity, so that the spring is protected.

The pin has an outer end in contact with the band and passing through the opening, and an inner end arranged in the cavity and resting against the spring. When the clamp is compressed, the inner end compresses the spring. When the clamp expands, the spring expands pushing the inner end, so the outer end pushes the band. This pin is rigid to transmit the forces between the clamp and the spring, allowing the force of the spring to be added to the force of the clamp to separate the band from the rings.

To attach the satellite to the launch vehicle, the lower surface of the upper ring comes into contact with the lower surface of the lower ring, and the pushers fit into the upper seats. The clamp is then compressed, so that the band is compressed against the rings, and the pin compresses the spring. When the band approaches the rings, the outer end moves with the band compressing the spring. This keeps the rings together and prevents them from separating.

When the clamp expands, the tension of the band is removed, and the clamp and bands move away from the rings. In addition, the spring force shifts the pin outward pushing the band. The elastic strength of the band and clamp and these pushers force the band to expand to an open position. This action facilitates complete separation of the band and clamp from the rings, allowing separation of the satellite to the launch vehicle. Therefore, pushers provide an auxiliary separation force, ensuring clean and complete separation.

Optionally, the base of the cylinder has a second opening, and the pin has an alignment section that projects from the inner end, in the opposite direction to the other end, and through the second opening. In this way, the pin moves longitudinally between the openings, avoiding misalignment or tilting of the outer end.

Regarding the attachment of the pusher to the lower ring, the cylinder wall can be attached by adhesive to the lower seats. In this way, the position of the pusher with respect to the clamp is ensured. Alternatively, the base and wall can be machined into the lower ring, and the lid can be fixed to the wall afterwards.

The pusher can also have an anchor at the base of the cylinder linked to the lower ring. This anchor allows the secure and reinforce the attachment of the cylinder to the lower ring, preventing the pusher from detaching. The anchor can have mechanical and/or adhesive elements.

Also, the inner end can be larger in diameter than the opening to prevent the inner end from being pulled out of the cavity. Thus, the spring pushes the inner end until the inner end contacts the lid or until the outer end contacts the band.

In addition, these pushers also mechanically prevent rotation of the upper ring with respect to the lower ring. These pushers are strategically distributed in the lower seats of the upper surface of the lower ring and fit into the upper seats of the lower surface of the upper ring. Thus, pushers are also designed to prevent rotation of the upper ring with respect to the lower ring, and to provide additional rotational rigidity to the entire assembly during dynamic loads. By stabilizing the rings, the pusher allows for cleaner and more predictable separation, reducing disturbances.

The combination of band separation and rotational stiffness of the rings in the docking position involves a mechanism designed for highly accurate and predictable satellite separation. This is critical for modern missions involving highly sensitive payloads that demand minimal disturbances during separation. Thus, in the invention, the clamp is achieved to expand cleanly due to pushers, and the upper and lower surfaces of the rings remain rotationally stable due to the pushers, making the separation significantly more predictable.

### DESCRIPTION OF THE DRAWINGS

To complement the description that is made and to help a better understanding of the characteristics of the invention, according to a preferred example of practical realization of the invention, a set of drawings is attached as an integral part of said description in which, for illustrative and not limited purposes, the following has been represented:
Figure 1.- Shows a perspective view of the first realization in the docking position of the satellite and the launch vehicle.
Figure 2.- Shows a perspective view of the first realization in the position of separation of the satellite and the launch vehicle.
Figure 3.- Shows a detailed perspective view of three pushers in the lower ring.
Figure 4.- Shows a section view of the first realization in docking position of the satellite and the launch vehicle.
Figure 5.- Shows a sectional view of the first realization between the docking position and the separation position of the satellite and the launch vehicle.
Figure 6.- Shows a section view of the first realization in a position of separation of the satellite and the launch vehicle.
Figure 7.- Shows a section view of a second embodiment between the docking position and the separation position of the satellite and the launch vehicle.

### PREFERRED EMBODIMENT OF THE INVENTION

A preferent embodiment of the separation mechanism of a satellite (10) from a launch vehicle (9), which is the subject of this invention, is described below.

The separation mechanism comprises;
an upper ring (8) on the satellite (10) with an upper side edge (27) and a lower contact surface (25),
a lower ring (7) on the launch vehicle with a lower side edge (26) and an upper contact surface (24), intended to be in contact with the lower surface (25) at the docking position of the satellite (10) with the launch vehicle (9),
an expandable clamp (5) on the launch vehicle (9), and
at least one elastic contact band (6) attached to the clamp (5) intended to embrace the side edges (26,27) of the rings (7,8) in the docking position with the compressed clamp (5), and, once the clamp (5) is expanded, the band (6) is released, and the rings (7,8) are separated.

In addition, the lower ring (7) comprises at least two lower seats (22) on the upper surface (24), and the upper ring (8) comprises at least two upper seats (23) on the lower surface (25).

The mechanism additionally comprises at least two pushers (11), where each pusher (11) comprises; a cylinder (2), a spring (4) and a pin (1).

The cylinder (2) is fitted and fixed to the lower seat (22) of the lower ring (7) and, in the docking position of the satellite (10) with the launch vehicle (9), the cylinder (2) is fitted in the upper seat (23) of the upper ring (8). The cylinder (2) has: a base (16), a lid (17) on the opposite side of the base (16), a wall (18) joining the base (16) and the lid (17), an internal cavity (3) bounded by the base (16), lid (17) and wall (18). The lid (17) also has an opening (12).

Spring (4) is fixed to the base (16) in the cavity (3).

The pin (1) has an outer end (14) and an inner end (15). The outer end (14) is in contact with the band (6) and passes through the opening (12). The inner end (15) is arranged in the cavity (3) and rests against the spring (4). The inner end (15) compresses the spring (4) in the docking position with the compressed clamp (5). When the clamp (5) expands, the spring (4) expands and pushes the pin (1) against the band (6), separating the band (6) from the rings (7,8).

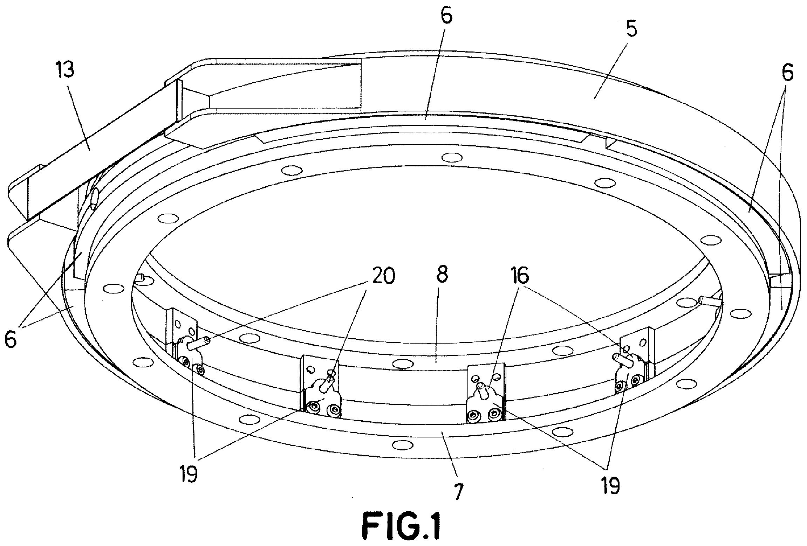

Fig.1 shows a perspective view of the first realization in the docking position of the satellite (10) with the launch vehicle (9). The clamp (5) is compressed, and the bands (6) hug the side edges (26,27) of the lower ring (7) and the upper ring (8). In addition, the clamp (5) comprises a primary tension mechanism (13), which compresses the clamp (5).

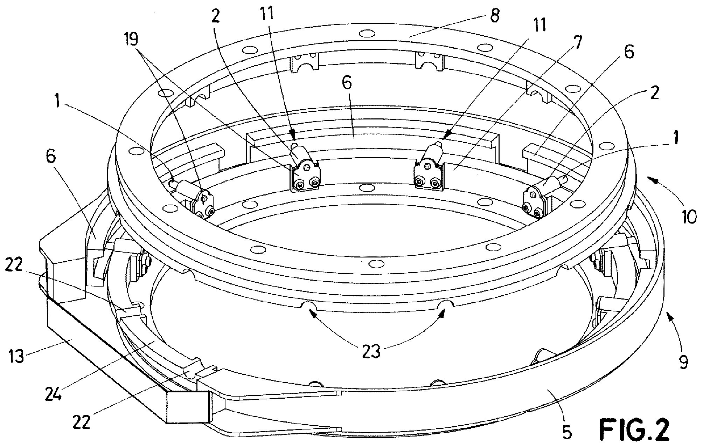

Fig. 2 shows in perspective the first realization in a position of separation of the satellite (10) from the launch vehicle (9). The upper ring (8) of the satellite (10) is separated from the launch vehicle (9), and the clamp (5) is expanded.

Therefore, the expandable clamp (5) is an elastic element that is compressed and, when compression ceases, the clamp (5) expands and recovers its original shape. When the clamp (5) is compressed, the clamp (5) approaches the rings (7,8), and the band (6) hugs the rings (7,8). When the clamp (5) expands, the clamp (5) moves away from the rings (7,8), and the band (6) stops hugging the rings (7,8).

In addition, the pushers (11) are additionally attached to the lower ring (7) by an anchor (19). For example, the anchor (19) comprises a plate attached to the base (16) and screws that thread into the lower ring (7). Alternatively, the anchor (19) is glued to the lower ring (17).

In the separation position of Fig. 2, the clamp (5) is expanded, so that the clamp (5) recovers its original shape. The bands (6) attached to the clamp (5) are separated from the lower ring (7). In addition, the pins (1) of the pushers (11) are pushing the bands (6) outward, ensuring that no bands (6) get stuck with the rings (7,8). Thus, when the clamp (5) expands, the combination of the clamp's own strength and the pushers (11) makes it possible to ensure the separation of the bands (6) from the rings (7,8).

In the lower ring (7), the lower seats (22) on the upper surface (24) facing the primary tension mechanism (13) are empty. In the separation position, the upper ring (8) is separated from the lower ring (7), and the lower surface (25) and upper seats (23) are separated from the upper surface (22) and pushers (11).

In the embodiment shown in Fig.1 and Fig.2, the launch vehicle (9) comprises five bands (6) between the lower ring (7) and the clamp (5). In an alternative embodiment, the bands (6) are connected or form a single band (6).

Each of the bands (6) of the clamp (5) has two (11) pushers associated with it (6) to ensure its separation. Each of these pushers (11) is near one end of each band (6). Each pair of pushers (11) pushes each band (6) so that, in the separation position, neither band (6) is attached to the rings (7,8).

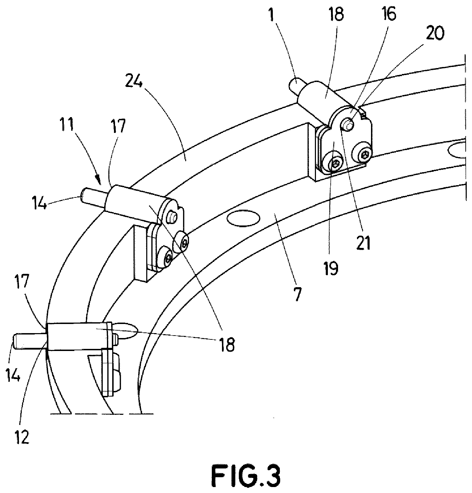

Fig.3 shows a detailed view in which three pushers (11) are fixed and fitted into the lower seats (22) of the lower ring (7). Each pusher (11) has the cylinder (2), spring (4) and pin (1). The cylinder (2) has the base (16), the lid (17) in front of the band (6) and the wall (18) partially attached to the lower ring (7). In the position shown, the outer ends (14) are separating the band (6), not shown, from the lower ring (7).

According to one embodiment, the wall (18) is fitted and fixed to the lower seat (22) by means of adhesive elements. In the docking position, the wall (18) is fitted in the upper seat (23) of the upper ring (8). Therefore, in the docking position, the upper surface (24) of the lower ring (7) is in contact with the lower surface (25) of the upper ring (8), and the upper seats (23) are in contact with the pushers (11).

In addition, the base (16) of the cylinder (2) is attached to the anchor (19), which is also linked to the lower ring (7). In this way, the anchor (19), by means of mechanical elements or adhesive elements, prevents the pushers (11) from detaching from the lower ring (7) during the separation of the satellite (10) and the launch vehicle (9).

The lid (17) has the opening (12), and the pin (1) passes through the opening (12). The outer end (14) moves from the opening (12) to a radial distance, where the band (6) is away from the lower ring (7). In addition, the base (16) has the second opening (21), and the pin (1) comprises an alignment section (20) that passes through the second opening (12), allowing the pin (1) to move longitudinally between the openings (12,21).

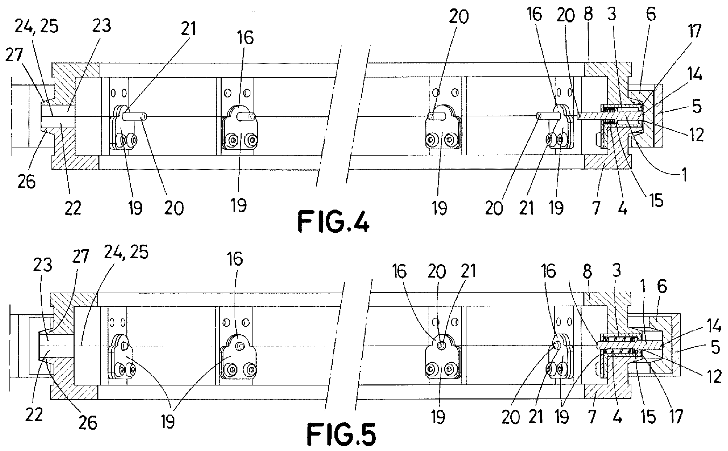

Fig. 4 shows the section of the first embodiment, in the docking position of the satellite (10) with the launch vehicle (9). The clamp (5) is compressed against the rings (7,8), and the band (6) hugs the side edges (26,27) of the rings (7,8). In this way, the outer end (14) is in the opening (12) of the lid (17), and the outer end (14) and the lid (17) are in contact with the band (6).

In addition, the base (16) has the second opening (21), and the pin (1) comprises the alignment section (20) that projects from the inner end (15) in the opposite direction to the outer end (14), and the alignment section (20) through the second opening (21).

Fig. 5 shows an intermediate position between the docking position and the position of separation of the satellite (10) from the launch vehicle (9). The clamp (5) is expanded, and the elastic force of the clamp (5) and pushers (11) keep the clamp (5) and band (6) separate from the rings (7,8).

When the clamp (5) expands, at the same time, the spring (4) pushes the inner end (15) causing the outer end (14) to push the band (6) and the clamp (5) outwards. In this way, the band (6) is separated from the rings (7,8), and the upper ring (8) can be separated from the lower ring (7). In addition, other mechanisms or the weight of the launch vehicle itself (9) cause the launch vehicle (9) and the satellite (10) to separate longitudinally.

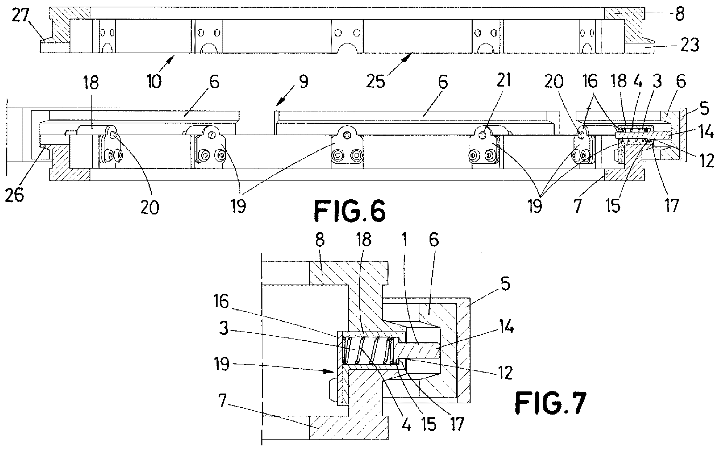

Fig. 6 shows the section in the separation position, where the upper ring (8) of the satellite (10) is already separated from the lower ring (7) of the launch vehicle (9). In this way, the satellite (10) and the launch vehicle (9) are separated, so that each of them (9,10) moves independently in space. The launch vehicle (9) continues as in Fig.5.

Fig. 7 shows a second embodiment where the pin (1) has an inner end (15) whose diameter is similar to the diameter of the cavity (3). The pin (1) performs a longitudinal displacement with respect to the longitudinal axis of the cavity (3), avoiding misalignment.

The inner end (15) rests on the spring (4), so the pin (1) is located between the spring (4) and the band (6), transmitting the forces. When clamp (5) is compressed, pin (1) compresses the spring (4) by the force of the clamp (5).

When clamp (5) is expanded, pin (1) pushes the band (6) and clamp (5) by the force of the spring (4).

## Claims

1. Mechanism for separating a satellite (10) from a launch vehicle (9), which comprises;
an upper ring (8) on the satellite (10) with an upper side edge (27) and a lower contact surface (25),
a lower ring (7) on the launch vehicle (9) with a lower side edge (26) and an upper contact surface (24), intended to be in contact with the lower surface (25) at the docking position of the satellite (10) with the launch vehicle (9),
an expandable clamp (5) on the launch vehicle (9), and
at least one elastic contact band (6) attached to the clamp (5) and intended to embrace the lateral edges (26,27) of the rings (7,8) in the docking position with the compressed clamp (5), and, once the clamp (5) is expanded, the band (6) is released, and the rings (7,8) are separated,
**characterized by**;
the lower ring (7) comprises at least two lower seats (22) on the upper surface (24),
the upper ring (8) comprises at least two upper seats (23) on the lower surface (25), and
the mechanism additionally comprises;
at least two pushers (11), where each pusher (11) comprises;
a cylinder (2) is fitted and fixed to the lower seat (22) of the lower ring (7) and, in the docking position of the satellite (10) with the launch vehicle (9), the cylinder (2) is fitted to the upper seat (23) of the upper ring (8), wherein the cylinder (2) has:
a base (16),
a lid (17) on the side opposite the base (16),
a wall (18) joining the base (16) and the lid (17),
an internal cavity (3) bounded by the base (16), lid (17) and wall (18), and
an opening (12) in the lid (17),
a spring (4) is fixed to the base (16) in the cavity (3), and
a pin (1) has;
an outer end (14) in contact with the band (6) and passing through the opening (12), and
an inner end (15) arranged in the cavity (3) and resting against the spring (4), subjecting the spring (4) to compression in the docking position with the clamp (5) compressed, and the spring (4) expands and pushes the pin (1) against the band (6), when the clamp (5) expands by separating the band (6) from the rings (7,8).

2. The auxiliary strip separation mechanism of claim 1, wherein the base (16) has a second opening (21), and the pin (1) comprises an alignment section (20) projecting from the inner end (15) in the opposite direction to the outer end (14) and passing through the second opening (21).

3. The auxiliary mechanism for separating the bands of claim 1, in which the pushers (11) comprise an anchor (19) at the base (16) linked to the lower ring (7).

4. The auxiliary mechanism for separating the bands of claim 1, in which the inner end (15) is greater than the opening (12).

5. The auxiliary band separation mechanism of claim 1, in which at least two pushers (11) are in contact with each band (6).
